(19) Europäisches Patentamt
European Patent Office
Office européen des brevets

(11) **EP 4 447 569 B1**

(12) **EUROPEAN PATENT SPECIFICATION**

(45) Date of publication and mention
of the grant of the patent:
**08.04.2026 Bulletin 2026/15**

(21) Application number: **22919018.6**

(22) Date of filing: **30.11.2022**

(51) International Patent Classification (IPC):
*H04W 56/00* ^(2009.01)   *H04L 27/26* ^(2006.01)
*H04W 74/00* ^(2009.01)   *H04W 74/08* ^(2024.01)
*H04L 5/00* ^(2006.01)

(52) Cooperative Patent Classification (CPC):
**H04W 74/00; H04L 5/0012; H04L 5/0048;
H04L 5/0092; H04L 27/26; H04W 56/0045;
H04W 74/08; H04W 74/0833**

(86) International application number:
**PCT/KR2022/019297**

(87) International publication number:
**WO 2023/132481 (13.07.2023 Gazette 2023/28)**

(54) **DEVICE AND METHOD FOR ACQUIRING UPLINK SYNCHRONIZATION IN WIRELESS COMMUNICATION SYSTEM**

VORRICHTUNG UND VERFAHREN ZUR ERFASSUNG VON UPLINK-SYNCHRONISATION IN EINEM DRAHTLOSKOMMUNIKATIONSSYSTEM

DISPOSITIF ET PROCÉDÉ D'ACQUISITION DE SYNCHRONISATION DE LIAISON MONTANTE DANS UN SYSTÈME DE COMMUNICATION SANS FIL

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **10.01.2022   KR 20220003608
27.01.2022   KR 20220012362**

(43) Date of publication of application:
**16.10.2024 Bulletin 2024/42**

(73) Proprietor: **Samsung Electronics Co., Ltd.
Suwon-si, Gyeonggi-do 16677 (KR)**

(72) Inventors:
• **LEE, Jonghyeuk**
**Suwon-si, Gyeonggi-do 16677 (KR)**
• **KIM, Hyuncheol**
**Suwon-si, Gyeonggi-do 16677 (KR)**

(74) Representative: **HGF**
**HGF Limited
4th Floor, 1 City Square
Leeds LS1 2ES (GB)**

(56) References cited:
CN-A- 110 891 036      KR-A- 20010 052 683
KR-A- 20100 081 270    KR-A- 20190 115 162
KR-B1- 100 585 173     KR-B1- 100 664 018

EP 4 447 569 B1

## Description

### [Technical Field]

The disclosure relates to a base station and methods for acquiring uplink synchronization in a wireless communication system.

### [Background Art]

Efforts have been made to develop improved 5th generation (5G) communication systems or a pre-5G communication systems in order to meet the growing demand for wireless data traffic, since the commercialization of 4th generation (4G) communication systems. For this reason, the 5G communication system or the pre-5G communication system are often referred to as a beyond 4G network communication system or a post LTE (long term evolution) system.

In order to achieve a high data rate, the 5G communication systems are considered to be implemented in ultra-high frequency (mmWave) bands (e.g., 60 GHz band). In order to mitigate the transmission path loss of radio waves in the ultra-high frequency bands and increase the transmission distance of radio waves, beamforming, massive MIMO (multiple-input multiple-output), full dimensional MIMO (FD-MIMO), array antenna, analog beam-forming, and large scale antenna technologies have been discussed in the 5G communication systems.

Further, in order to improve networking of the system, the technologies such as e.g., evolved small cell, advanced small cell, cloud radio access network (cloud RAN), ultra-dense network, device-to-device communication (D2D), wireless backhaul, moving network, cooperative communication, coordinated multi-points (CoMP), interference cancellation, or the like have been developed in the 5G communication systems.

In addition, advanced coding modulation (ACM) schemes such as e.g., hybrid frequency shift keying and quadrature amplitude modulation (FQAM) and sliding window superposition coding (SWSC), as well as advanced access techniques such as e.g., filter bank multi carrier (FBMC), non-orthogonal multiple access (NOMA), and sparse code multiple access (SCMA) or the like are being developed for the 5G systems

Narrowband-internet of thing (NB-IoT) systems supporting low power wide area network (LPWAN) may obtain uplink synchronization by means of narrowband physical random access channel (NPRACH) preamble. The NPRACH preambles may support single-tone transmission, in which a symbol group is transmitted in a frequency-hopping scheme. In such a case, a base station may obtain a timing offset for uplink synchronization by means of correlation of neighboring symbol groups. However, it may be difficult for the base station to obtain an accurate timing offset only by the correlation between adjacent symbol groups. Therefore, it is necessary for the base station to also consider the correlation between non-neighboring symbol groups to obtain accurate timing offsets.

CN 110 891 036 describes an estimation method and device, in particular to an NPRACH timing synchronization estimation method and device. The described method is used for making accurate calculations of TA in a terminal high-speed moving scene and comprises the following steps of: a base station receives a preamble signal sent by a terminal; for each symbol group contained in a preamble signal, wherein the minimum frequency hopping interval is adopted for the frequency domain channel estimation value of an adjacent symbol group; frequency offset estimation is made, a coarse phase estimation result and a fine phase estimation result are obtained through a frequency offset compensation mode; the TA used by the terminal is acquired by calculations so that, the phase difference introduced by Doppler frequency offset at different time points is considered.

### [Detailed Description of the Invention]

### [Technical Problem]

Based on the above-described discussion, the disclosure provides a base station and methods for obtaining uplink synchronization in a wireless communication system.

Further, the disclosure also provides a base station and methods for obtaining a timing offset for uplink synchronization based on a correlation between symbol groups and a subcarrier difference between the symbol groups in a wireless communication system.

### [Technical Solution]

The invention is defined by the appended claims.

**[Advantageous Effect]**

A base station and methods according to embodiments of the disclosure may obtain uplink synchronization in a wireless communication system.

In addition, a device and methods according to embodiments of the disclosure may obtain a timing offset for uplink synchronization based on a correlation between symbol groups and a subcarrier difference between the symbol groups.

**[Brief Description of the Drawings]**

FIG. 1 illustrates a mode in which a narrowband-internet of things (NB-IoT) system is operated according to embodiments of the disclosure.

FIG. 2 illustrates a signal flow for random access (RA) in a wireless communication system according to embodiments of the disclosure.

FIG. 3 illustrates resource allocation of a narrowband physical random access channel (NPRACH) preamble according to embodiments of the disclosure.

FIG. 4 illustrates resource allocation of an NPRACH preamble according to embodiments of the disclosure.

FIG. 5 illustrates an operation flow of a base station according to embodiments of the disclosure.

FIG. 6 is a block diagram schematically illustrating a method for determining a timing offset according to embodiments of the disclosure.

FIG. 7 illustrates a symbol group correlator block according to embodiments of the disclosure.

FIG. 8 illustrates a correlation value combiner block according to embodiments of the disclosure.

FIG. 9 illustrates a timing offset decision block according to embodiments of the disclosure.

FIG. 10 illustrates a window block for determining a timing offset according to embodiments of the disclosure.

FIG. 11 illustrates a configuration of a base station according to embodiments of the disclosure.

FIG. 12 illustrates a configuration of a terminal according to embodiments of the disclosure.

**[Mode for Carrying out the Invention]**

Hereinafter, the operating principles of the disclosure will be described in detail with reference to the accompanying drawings. The terms used in the disclosure are merely used to better describe a certain embodiment and may not be intended to limit the scope of other embodiments. A singular expression may include a plural expression, unless the context explicitly dictates otherwise. The terms used herein, including technical and scientific terms, may have the same meanings as those commonly understood by those skilled in the art to which the disclosure pertains. Terms defined in a general dictionary amongst the terms used in the disclosure may be interpreted as having the same or similar meaning as those defined in the context of the related art, and they are not to be construed in an ideal or overly formal sense, unless explicitly defined in the disclosure. In some cases, even the terms defined in the disclosure may not be interpreted to exclude embodiments of the disclosure.

Further, throughout the disclosure, an expression such as e.g., 'more than' or 'less than' may be used to determine whether a specific condition is satisfied or fulfilled, but it is merely of a description for expressing an example and is not intended to exclude the meaning of 'more than or equal to' or 'less than or equal to'. A condition described as 'more than or equal to' may be replaced with 'more than', a condition described as 'less than or equal to' may be replaced with 'less than', and a condition described as 'more than or equal to and less than' may be replaced with 'more than and less than or equal to', respectively.

Further, in the disclosure, embodiments will be described using terms used in some communication standards (e.g., long term evolution (LTE) and new radio (NR) defined in 3rd generation partnership project (3GPP)), but it is only of an example for description. Embodiments of the disclosure may be easily modified and also applied to other communication systems.

Hereinafter, a method and a device for obtaining a timing offset for uplink synchronization by a base station according to embodiments of the disclosure will be described in more detail with reference to the accompanying drawings.

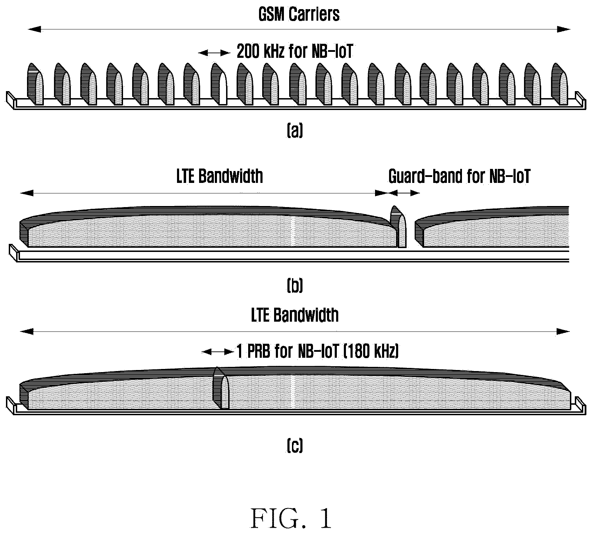

FIG. 1 illustrates an example of a mode in which a narrowband-internet of things (NB-IoT) system is operated according to embodiments of the disclosure.

The NB-IoT system may obtain uplink synchronization through a narrowband physical random access channel (NPRACH) preamble. As an example of a method for obtaining uplink synchronization, a base station may obtain the uplink synchronization by converting a phase offset obtained based on a correlation between NPRACH preambles into a timing offset.

The NPRACH preamble according to embodiments of the disclosure may be transmitted on a single tone. In such a case, the NPRACH preamble may be transmitted in an operation mode of any one of (a), (b), and (c) of FIG. 1.

As an example, referring to (a) of FIG. 1, the NB-IoT system according to an embodiment of the disclosure may be operated in a standalone mode (e.g., GSM re-farming) to provide NB-IoT, using a GSM frequency band for a global system for mobile telecommunication (GSM) service and a potential frequency band for an IoT service. In this case, one carrier (about 200 kHz band) among GSM carriers may be used as a single tone.

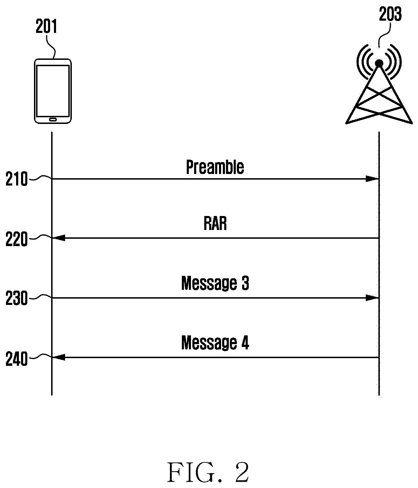

Further, for example, referring to (b) of FIG. 1, the NB-IoT system according to an embodiment of the disclosure may be operated in a guard-band mode to provide the NB-IoT service, using a resource block (RB) that is not used in a guard band defined in a long term evolution (LTE) frequency band. In this case, as illustrated in (b) of FIG. 2, the carrier in the LTE protection band may be used as a single tone.

Further, for example, referring to (c) of FIG. 1, the NB-IoT system according to an embodiment of the disclosure may be operated in an in-band mode to provide an NB-IoT service using a resource block in an LTE frequency band. In this case, as illustrated in (c) of FIG. 1, one physical resource block (PRB) in the LTE band may be used in a single tone (e.g., 180 kHz).

FIG. 2 illustrates a signal flow for random access in a wireless communication system according to embodiments of the disclosure. FIG. 2 illustrates a terminal 201 and a base station 203 as a part of nodes of a wireless communication system.

The terminal 201 is a device used by a user and may communicate with the base station 203 over a wireless channel. The terminal 201 may be referred to as a terminal, a user equipment (UE), a mobile station, a subscriber station, a customer premises equipment (CPE), a remote terminal, a wireless terminal, a vehicle terminal, a user device, or any other terms having the same technical meaning as the above.

The base station 203 is a radio access network (RAN) node, serving as a network infrastructure to provide radio access to a terminal. The base station 203 may be referred to as an access point (AP), an eNodeB (eNB), a 5th generation (5G) node, a next generation nodeB (gNB), a wireless point, a transmission and reception point (TRP), or any other terms having the same technical meaning as the above.

Referring to FIG. 2, in operation 210 of an initial access process, the base station 203 may receive a preamble from the terminal. Here, the preamble may correspond to a narrowband physical random access channel (NPRACH) preamble for narrowband-internet of things (NB-IoT). Further, the NPRACH preamble may be repeatedly transmitted on a time domain to improve coverage, and may be transmitted by a hopping manner on a frequency domain. The base station 203 may obtain a timing offset for uplink synchronization based on the received NPRACH preamble. The base station 203 may determine information for uplink synchronization based on the obtained timing offset. Here, the information for uplink synchronization may be a timing advance command (TAC) that is information of a medium access control (MAC) layer.

In operation 220, the base station 203 may transmit a random access response (RAR) to the terminal 201 in response to the preamble. The RAR may include TAC, which is information for uplink synchronization. The terminal 201 may identify a transmission timing of message 3 based on the TAC. In operation 230, the base station 203 may receive the message 3 from the terminal 201. Here, the message 3 may be transmitted at the transmission timing identified by the terminal in operation 220. In operation 240, the base station 203 may transmit message 4 to the terminal 201.

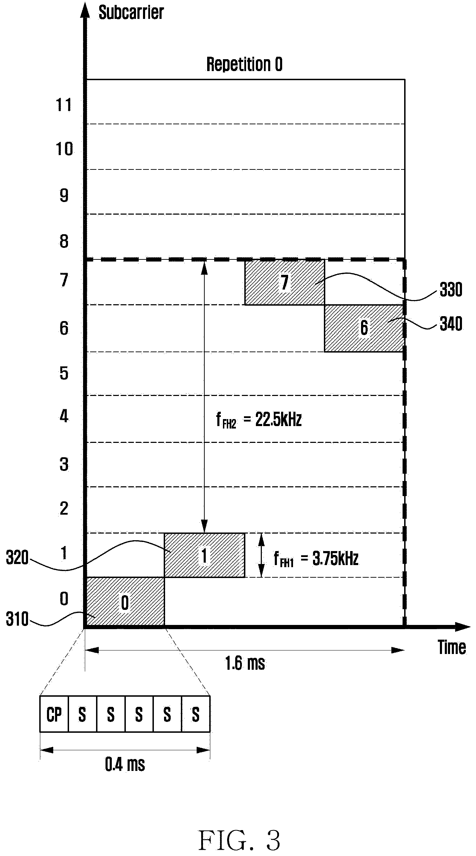

FIG. 3 illustrates resource allocation of an NPRACH preamble according to embodiments of the disclosure.

The narrowband-internet of things (NB-IoT) system may obtain uplink synchronization through a narrowband physical random access channel (NPRACH) preamble. In such a case, the NPRACH preamble may be repeatedly transmitted on the time domain to improve coverage, and may be transmitted by hopping on the frequency domain. FIG. 3 illustrates an example in which four symbol groups (310, 320, 330, 340) are transmitted in a frequency hopping scheme in one repetition 0. Further, a single tone according to embodiments of the disclosure may correspond to a single subcarrier.

The terminal may receive configuration information related to transmission of the NPRACH preamble through upper layer signaling (e.g., radio resource control (RRC) layer signaling). For example, the upper layer signaling may be a system information block. The configuration information related to the transmission of the NPRACH preamble may include at least one of information on the start subcarrier of the NPRACH resource, information on the number of subcarriers of the NPRACH resource, information on the NPRACH preamble format, information on the start time of the NPRACH resource, information on the number of repetitions of the NPRACH preamble, information on the NPRACH preamble format, or information on the cycle of the NPRACH resource. FIG. 3 illustrates an example in which an NPRACH resource is set with 12 subcarriers, a transmission cycle of 1.6ms, and one repetition count, and one symbol group has a length of 0.4ms. Here, one symbol group may include one cyclic prefix (CP) and five symbols. Meanwhile, while FIG. 3 illustrates one subcarrier at 3.75 kHz, but it is merely of an example, and the interval of the subcarriers may vary depending upon numerology applied to the terminal.

Referring to FIG. 3, the terminal may transmit the NPRACHs by hopping in the order of subcarriers 0, 1, 7, and 6. In such a case, the base station may obtain a correlation between the NPRACHs received from neighboring symbol groups, using the Equation 1 below:

<Equation 1>

$$R(k) = \sum_{a=0}^{A-1} \frac{R_a(k)}{\sigma_{n,a}^2}$$

wherein 'a' denotes an index of an antenna, and '$R_a(k)$' denotes a correlation value between NPRACHs having k subcarrier intervals in the antenna a. For example, when the NPRACH is transmitted as shown in FIG. 3, '$R_a(1)$' may be a sum of the correlation value of the NPRACHs (310, 320) received on the subcarrier 0 and the subcarrier 1 and the correlation value of the NPRACHs (330, 340) received on the subcarrier 7 and the subcarrier 6.

The base station may convert a phase offset estimated from the correlation value obtained using the Equation 1 into a timing offset through the Equation 2 below:

<Equation 2>

$$Time\_offset(k) = \frac{angle(R(k))}{Subcarrier\_space \times 2 \times \pi}$$

wherein 'angle(R(k))' denotes a radian value for a phase angle of the correlation value obtained in the Equation 1. The base station according to embodiments of the disclosure may instruct information on uplink synchronization to the terminal based on the timing offset obtained using the Equation 1 and the Equation 2. For example, the base station may instruct the information on uplink synchronization to the terminal through a timing advance command (TAC) included in a random access response (RAR). As another example, the base station may instruct the information on uplink synchronization to the terminal through the TAC included in a medium access control control element (MAC CE). The terminal may adjust the timing for uplink transmission based on the received information on uplink synchronization.

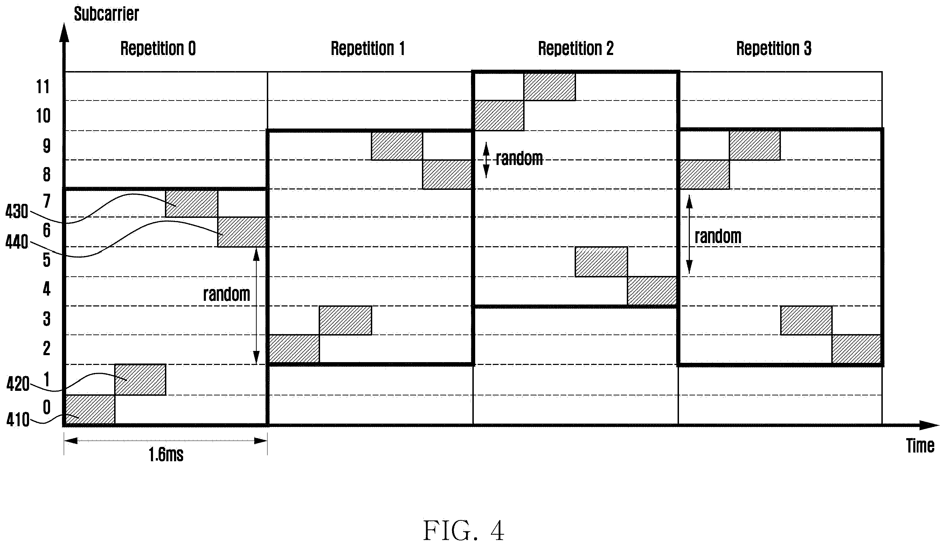

FIG. 4 illustrates resource allocation of an NPRACH preamble according to embodiments of the disclosure. FIG. 4 illustrates a case where the number of repetitions is set to 4. Referring to FIG. 4, in the first repetition period (repetition 0), the NPRACHs are transmitted hopping in the order of subcarriers 0, 1, 7, and 6. In the second repetition period (repetition 1), the NPRACHs are transmitted hopping in the order of subcarriers 2, 3, 9, and 8. In the third repetition period (repetition 2), the NPRACHs are transmitted hopping in the order of subcarriers 10, 11, 5, and 4. In the fourth repetition period (repetition 3), the NPRACHs are transmitted hopping in the order of subcarriers 8, 9, 3, and 2. The method illustrated in FIG. 4 may be referred to as multi-level frequency hopping.

In the multi-level frequency hopping scheme, hopping applied to transmission of the NPRACHs may be divided into a first level, a second level, and a third level.

First, the first level of hopping may mean hopping applied at one subcarrier interval. For example, referring to the first repetition period (repetition 0) of FIG. 3, the first level of hopping may mean hopping between a symbol group transmitted on the subcarrier 0 and a symbol group transmitted on the subcarrier 1. Further, the first level of hopping may mean hopping between a symbol group transmitted on the subcarrier 7 and a symbol group transmitted on the subcarrier 6 in the first repetition period (repetition 0). As another example, referring to the second repetition period (repetition 1) of FIG. 3, the first level of hopping may mean hopping between a symbol group transmitted on the subcarrier 2 and a symbol group transmitted on the subcarrier 3. Further, the first level of hopping may mean hopping between a symbol group transmitted on subcarrier 9 and a symbol group transmitted on the subcarrier 8 in the second repetition period (repetition 1). As another example, referring to the third repetition period (repetition 2) of FIG. 3, the first level of hopping may mean hopping between a symbol group transmitted on the subcarrier 10 and a symbol group transmitted on the subcarrier 11. Further, it may mean hopping between a symbol group transmitted on the subcarrier 5 and a symbol group transmitted on the subcarrier 4 in the third repetition period (repetition 2) of the first level. As another example, referring to the fourth repetition period (repetition 3) of FIG. 3, the first level of hopping may mean hopping between a symbol group transmitted on the subcarrier 8 and a symbol group transmitted on the subcarrier 9. Further, the first level of hopping may mean hopping between a symbol group transmitted on the subcarrier 3 and a symbol group transmitted on the subcarrier 2 in the fourth repetition period 3 (repetition 3). Accordingly, in the example illustrated in FIG. 3, the first level of hopping may be performed eight times in total.

Secondly, the second level of hopping may mean hopping applied at six subcarrier intervals. For example, referring to the first repetition period (repetition 0) of FIG. 3, the second level of hopping may mean hopping between a symbol group transmitted on the subcarrier 1 and a symbol group transmitted on the subcarrier 7. As another example, referring to the second repetition period (repetition 1) of FIG. 3, the second level of hopping may mean hopping between a symbol group transmitted on the subcarrier 3 and a symbol group transmitted on the subcarrier 9. As another example, referring to the third repetition period (repetition 2), the second level of hopping may mean hopping between a symbol group transmitted on the subcarrier 11 and a symbol group transmitted on the subcarrier 5. As another example, referring to the fourth repetition period (repetition 3), the second level of hopping may mean hopping between a symbol group transmitted on the subcarrier 9 and a symbol group transmitted on the subcarrier 3. Accordingly, the second level of hopping in four repetition periods may be performed four times in total.

Thirdly, the third level of hopping may mean hopping applied between repetition periods, and may be referred to as random hopping. For example, referring to FIG. 3, the third level of hopping may mean hopping between a symbol group transmitted on the subcarrier 6 of the first repetition period (repetition 0) and a symbol group transmitted on the subcarrier 2 of the second repetition period (repetition 1). In this case, the randomly selected hopping interval may be 4. Further, the third level of hopping may mean hopping between a symbol group transmitted on the subcarrier 8 of the second repetition period and a symbol group transmitted on the subcarrier 10 of the third repetition period. In such a case, the randomly selected hopping interval may be 2. Further, the third level of hopping may mean hopping between a symbol group transmitted on the subcarrier 4 of the third repetition period and a symbol group transmitted on the subcarrier 8 of the fourth repetition period. In this case, the randomly selected hopping interval may be 4. Accordingly, the third level of hopping in four repetition periods may be performed three times in total.

In case where the base station obtains a timing offset using a correlation between adjacent subcarriers, according to the scheme described with reference to FIG. 2, only the first level of hopping from among the above-described three hopping levels may be applied. In other words, the base station uses only correlation values between adjacent symbol groups, according to a specific subcarrier interval difference (e.g., 1), and thus it may be difficult to obtain an accurate timing offset.

When the correlation information is referred to as is R(k) where the interval between the subcarriers is k, if a machine learning (ML) algorithm is applied, it may be expressed as the following equation.

<Equation 3>

$$\hat{\tau}_{ml} = \max_{\tau}\left(\sum_{k=0}^{K-1} Power\left[e^{-j2\pi\Delta f\tau k}R(k)\right]\right)$$

Here, the Power operation is a power operation ($I^2+Q^2$) for each complex number, and assuming $\Delta f\tau = \dfrac{m}{M}$ in the above equation (wherein 'M' is an FFT size), the Equation 3 may be expressed as Equation 4 below:

<Equation 4>

$$\hat{m}_{ml} = \max_m \left( \sum_{k=0}^{M-1} Power \left[ e^{-j2\pi \frac{m}{M} k} R(k) \right] \right)$$

$$= \max_m \left( \sum_{k=0}^{M-1} Power \left[ FFT(R(k)) \right] \right)$$

Accordingly, a method of obtaining a timing offset by considering not only the first hopping level but also the second hopping level and the third hopping level, by simply implementing an ML algorithm using the FFT will be described below.

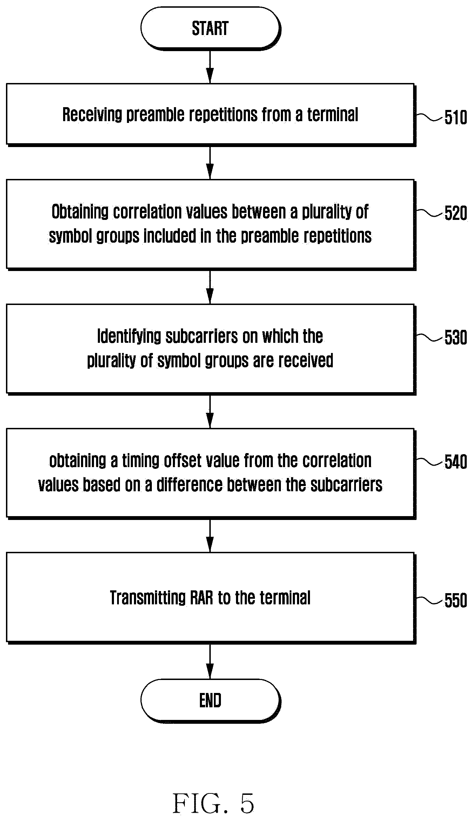

FIG. 5 illustrates an operation flow of a base station according to embodiments of the disclosure. In FIG. 5, an operation of the base station for obtaining an uplink timing offset will be described with reference to resource allocation of a narrowband physical random access channel (NPRACH) preamble of FIG. 4.

In operation 510, the base station may receive preamble repetitions from a terminal. Here, the preamble may be an NPRACH preamble for NB-internet of things (NB-IoT). The NPRACH preamble may be repeatedly transmitted on the time domain to improve coverage, and may be transmitted by hopping on the frequency domain. In this case, the unit in which the NPRACH preamble is repeatedly transmitted may be referred to as a symbol group. The symbol group may include one cyclic prefix (CP) and five symbols. Referring to FIG. 4, it may be indexed as symbol group 0 (410), symbol group 1 (420), symbol group 2 (430), and symbol group 3 (440). The base station may remove the CP from the symbol group and sum the symbols included in the symbol group (hereinafter, referred to as coherent combining). The coherent combining operation may be expressed as Equation 5 below:

<Equation 5>

$$y_a[l] = \sum_{t=0}^{4} s_i(t)$$

wherein 'a' denotes an antenna index, 'l' denotes a symbol group index, and 't' denotes an index of a symbol in a symbol group.

The base station may perform a coherent combining operation for each symbol group. For example, referring to FIG. 4, the base station may perform an operation of coherent combining five symbols of the symbol group 0 (410), which may be expressed as $y_a[0]$. Further, the base station may perform an operation of coherent combining five symbols of the symbol group 1 (420), which may be expressed as $y_a[1]$. Further, the base station may perform an operation of coherent combining five symbols of symbol group 2 (430), which may be expressed as $y_a[2]$. Furthermore, the base station may perform an operation of coherent combining five symbols of the symbol group 3 (440), which may be expressed as $y_a[3]$. FIG. 4 illustrates a total of 16 symbol groups, and the base station may perform an operation of coherent combining symbols of each symbol group, wherein a result of coherent combining of an i-th symbol group may be expressed as $y_a[i]$.

In operation 520, the base station may obtain correlation values between a plurality of symbol groups included in preamble repetitions. After performing the coherent combining operation for each symbol group, the base station may obtain a correlation value between the symbol groups. An operation of obtaining the correlation value between the symbol groups may be expressed as Equation 6 below:

<Equation 6>

$$R_d[l] = \sum_{a=0}^{A-1} y_a[l]^* y_a[l-d]$$

wherein 'A' denotes the number of antennas, 'a' denotes an antenna index, 'l' denotes an index of a symbol group, and 'd' denotes an interval between symbol groups.

For example, when A=1, referring to FIG. 4, $R_1[1]$ is a correlation value between the symbol group 0 (410) and the symbol group 1 (420), and may be expressed as $R_1[1]=y_a[1]y_a^*[0]$, where * means conjugate). Further, $R_1[2]$ is a correlation value between the symbol group 2 (430) and the symbol group 1 (420), and may be expressed as $R_1[2]=y_a[2]$ $^*y_a[1]$. In this way, $R_2[i]$ may indicate a correlation between a two symbol group interval, $R_3[i]$ may indicate a correlation between a three symbol group interval, and $R_4[i]$ may indicate a correlation between a four symbol group interval. The correlation value obtained through the above process may have 15 1-symbol group intervals, 14 2-symbol group intervals, 13 3-symbol group intervals, and 12 4-symbol group intervals.

In operation 530, the base station may identify subcarriers on which a plurality of symbol groups are received. Here, the subcarriers may refer to subcarriers in which its symbol group received. For example, referring to FIG. 4, the base station may identify that the symbol group 0 (410) is received on the subcarrier 0, the symbol group 1 (420) is received by the subcarrier 1, the symbol group 3 (430) is received by the subcarrier 7, and the symbol group 4 (440) is received by the subcarrier 6.

In operation 540, the base station may obtain a timing offset value from the correlation values based on a difference between the subcarriers. Here, the difference between the subcarriers may refer to an interval difference between the subcarriers used to calculate the correlation values in operation 520. The base station may classify the correlation values calculated for each symbol group interval based on the interval difference between the subcarriers. For example, when the number of subcarriers allocated through upper layer signaling for NPRACH preamble transmission is 12, there may be 22 interval differences between the subcarriers from -11 to -1 and from 1 to 11. The base station may map the correlation values to 22 inputs (0-10, 12-22) of fast Fourier transform (FFT) inputs, based on the interval difference between the subcarriers. That is, according to the interval difference between the subcarriers, -11 to -1 may be sequentially mapped to 0 to 10 of the input indexes of the FFT, 1 to 11 may be mapped to 12 to 22, and a value of 0 is input to the input index 11 of the FFT. For example, referring to FIG. 4, $R_1[3]$ may be a summed value after calculating a correlation value between the symbol group 3 (440) and the symbol group 2 (430) for each antenna. Here, since the interval difference between the subcarriers used to calculate the correlation value is -1, the base station may map $R_1[3]$ to the input index 10 of the FFT. As another example, referring to FIG. 4, $R_2[3]$ may be a summed value after calculating a correlation value between the symbol group 3 (440) and the symbol group 1 (420) for each antenna. Here, since the interval difference between the subcarriers used to calculate the correlation value is 5, the base station may map $R_2[3]$ to the input index 16 of the FFT. The base station may perform Fourier transform after setting to zero the remaining FFT input indices except for 0 to 10 and 12 to 22 amongst the input indices of the FFT. After performing the Fourier transform, the base station may set to zero all of the output values of the FFT except for those that are real numbers. Thereafter, the base station may identify a maximum value amongst output values included in a specific window (e.g., a pre-window or a post-window). Here, when the maximum value is identified in the pre-window, a negative delay may be set by applying the FFT index-512. The base station may obtain the timing offset value based on an FFT index and a sampling rate of the identified maximum value. The process of obtaining the timing offset value based on the FFT index and the sampling rate of the identified maximum value may be expressed as Equation 7 below:

### \<Equation 7\>

$$\text{Timing offset} = \text{FFT index having the maximum value} / \text{Sampling rate}$$

In operation 550, the base station may transmit a random access response (RAR) to the terminal. The RAR may include a timing advance command (TAC) including information on uplink timing. Here, the TAC may be determined based on the timing offset value obtained in operation 540.

As described above, the present invention is not limited to an adjacent symbol group and one subcarrier interval difference, and therefore, more accurate uplink timing can be obtained using a simple implementation. Hereinafter, each process thereof will be described in greater detail.

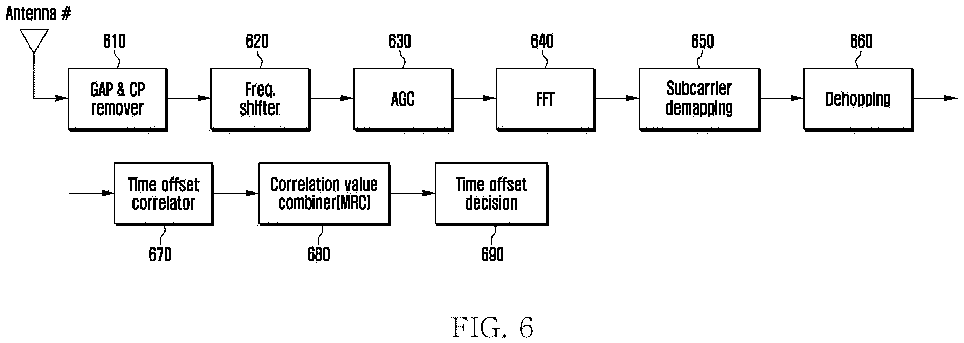

FIG. 6 is a schematic block diagram illustrating a method for determining a timing offset according to embodiments of the disclosure. FIG. 6 illustrates a block diagram of an operation in which a base station receives a narrowband physical random access channel (NPRACH) preamble to estimate an uplink timing offset.

The base station may receive the NPRACH preamble from the antenna. The base station may remove (610) a GAP and a cyclic prefix (CP) included in the NPRACH preamble. As described above, the signal from which the GAP and the CP are removed may be input to a frequency shifter 620 to perform frequency shifting, and may be input to an AGC 630 to be adjusted to a signal included in a predetermined bit area. The signal passing through the AGC 630 may be transmitted as an input of an FFT. An output of the FFT may be demapped to subcarriers used for transmitting the NPRACH preamble. After demapping, the NPRACH preamble transmitted using the same subcarrier may be summed over a symbol group (hereafter, referred to as coherent combining) by dehopping the hopping operation performed. The coherent combining process may be expressed as Equation 5 above.

The base station may perform a coherent combining operation for each symbol group. For example, referring to FIG. 3, the base station may perform an operation of summing five symbols of the symbol group 0 (310) received on the subcarrier 0, which may be expressed as $y_a[0]$. Further, the base station may perform an operation of summing five symbols of the symbol group 1 (320) received on the subcarrier 1, which may be expressed as $y_a[1]$. Further, the base station may perform an operation of summing five symbols of the symbol group 2 (330) received on the subcarrier 7, which may be expressed as $y_a[2]$. Furthermore, the base station may perform an operation of summing five symbols of the symbol group 3 (340) received on the subcarrier 6, which may be expressed as $y_a[3]$.

The base station may perform a coherent combining operation for each symbol group in the NPRACH repetitions, and then may perform a process of obtaining a correlation value between the symbol groups.

For example, when A=1, referring to FIG. 3, $R_1[1]$ is a correlation value between the symbol group 0 (310) and the symbol group 1 (320), and may be expressed as $R_1[1]=y_a[1]^*y_a[0]$. Further, $R_1[2]$ is a correlation value between the symbol group 1 (320) and the symbol group 2 (330), and may be expressed as $R_1[2]=y_a[2]^*y_a[1]$. In this way, $R_2[i]$ may indicate a correlation between a two symbol group interval, $R_3[i]$ may indicate a correlation between a three symbol group interval, and $R_4[i]$ may indicate a correlation between a four symbol group interval. The correlation values for each symbol group interval are summed for all receiving antennas and then provided as an input of the correlation value combiner block. That is, $R_1[i]$, $R_2[i]$, $R_3[i]$, and $R_4[i]$ are provided as inputs of the correlation value combiner block. The correlation value combiner block may classify the inputs based on information on a positional difference of the subcarrier and then provide the same as inputs of a timing offset decision block. After performing the FFT of the inputs, the timing offset decision block may calculate the timing offset based on the FFT index and the sampling rate of the maximum value. The timing offset may be calculated based on Equation 7 above.

The base station may obtain a timing advance command (TAC) value based on the calculated timing offset. The base station may transmit a random access response (RAR) including the obtained TAC value to a terminal. The terminal may adjust the timing for uplink transmission based on the received TAC value.

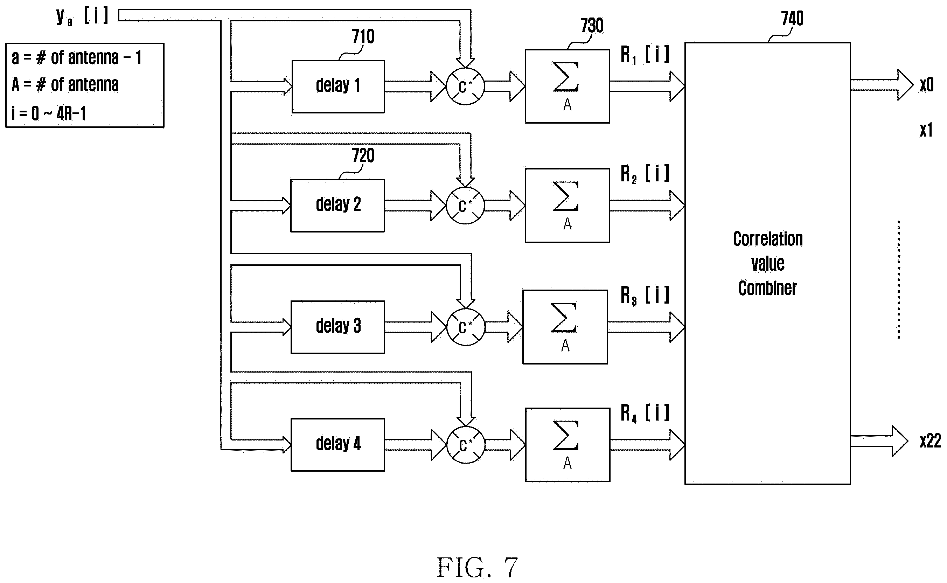

FIG. 7 illustrates a symbol group correlator according to embodiments of the disclosure. FIG. 7 describes a method of summing correlation values between symbol groups based on a symbol group interval. The symbol group correlator shown in FIG. 7 may include the timing offset correlator 670 and the correlation value combiner 680 shown in FIG. 6.

Referring to FIG. 7, $y_a[i]$ may be a result of performing a summation operation (hereinafter, referred to as coherent combining) of an i-th symbol group for a narrowband physical random access channel (NPRACH) preamble received through an antenna port a. For example, referring to FIG. 4, $y_a[0]$ may be the result of coherent combining five symbols of a symbol group 410 received on the subcarrier 0 at the first repetition 0.

The base station may perform an operation of calculating a correlation value for each symbol group interval after performing the coherent combining. For example, delay 1 shown in FIG. 7 may refer to a difference of one symbol group interval. Further, delay 2 may refer to a difference of a two symbol group interval. Furthermore, delay 3 may refer to a difference of a three symbol group interval. Furthermore, delay 4 may mean a difference of a four symbol group interval.

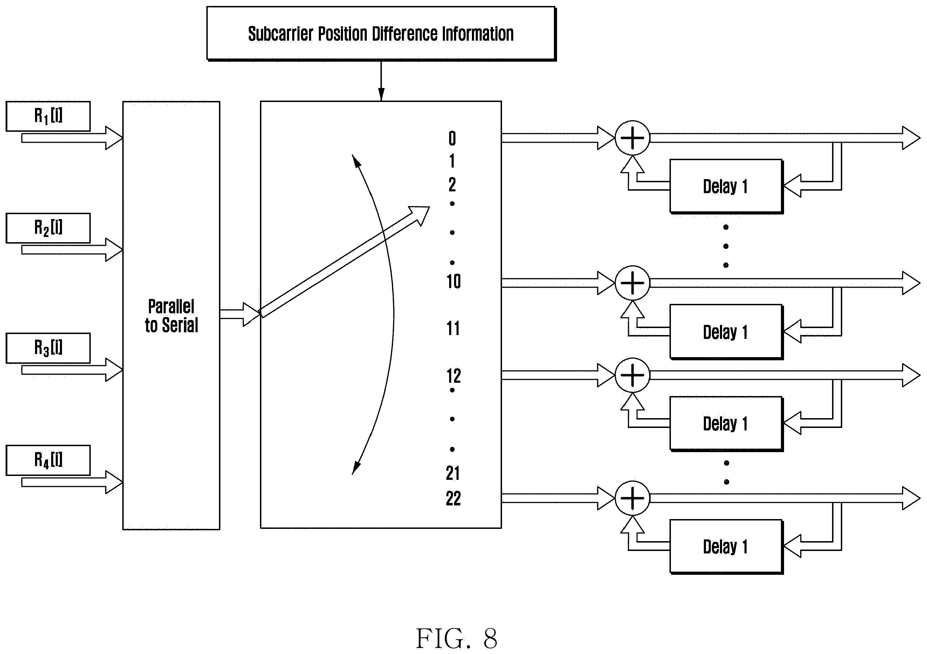

In other words, the base station may calculate and coherent combine correlation values for each symbol group interval for the entirety of A reception antennas. Here, the result of coherent combining the correlation values for one symbol group interval may be expressed as $R_1[i]$. Further, the result obtained by coherent combining the correlation values for a two symbol group interval may be expressed as $R_2[i]$. Further, the result obtained by coherent combining the correlation values for a three symbol group interval may be expressed as $R_3[i]$. Further, the result obtained by coherent combining the correlation values for a four symbol group interval may be expressed as $R_4[i]$. The correlation values $R_1[i]$, $R_2[i]$, $R_3[i]$, and $R_4[i]$ coherent combined for each symbol group interval may be provided as an input of the correlation value combiner. The correlation value combiner may classify $R_1[i]$, $R_2[i]$, $R_3[i]$, and $R_4[i]$ provided as the input, based on subcarrier position difference information, and then provide the same as an input to the timing offset decision block. An operation of classifying $R_1[i]$, $R_2[i]$, $R_3[i]$, and $R_4[i]$ according to the correlation value combiner and then providing the classified ones to the timing offset decision block will be described in more detail with reference to FIG. 8 below.

FIG. 8 illustrates an example of a correlation value combiner block according to embodiments of the disclosure. In FIG. 8, an operation performed by the correlation value combiner 740 illustrated in FIG. 7 will be described in more detail.

Referring to FIG. 8, $R_1[i]$, $R_2[i]$, $R_3[i]$, and $R_4[i]$ may be provided as inputs of the correlation value combiner. $R_d[i]$ may be a result of coherent combining the correlation values of a symbol group i and another symbol group i-d calculated for each antenna. That is to say, $R_1[i]$ may correspond to the result of coherent combining the correlation values calculated at one symbol group interval. Further, $R_2[i]$ may correspond to the result of coherent combining the correlation values calculated at a two symbol group interval. Further, $R_3[i]$ may correspond to the result of coherent combining the correlation values calculated at a three symbol group interval. $R_4[i]$ may correspond to the result of coherent combining the correlation values calculated at a four symbol group interval.

The correlation value combiner may classify the result of coherent combining the correlation values based on the subcarrier position difference information. Here, the subcarrier position difference information may refer to subcarrier intervals (e.g., -11 to - 1, 1 to 11) used in the process of calculating the correlation value, and the result obtained by coherent combining of the correlation values may be classified into 22 types (e.g., 0 to 10, 12 to 22). In other words, the subcarriers intervals (-11 to -1, 1 to 11) may be mapped to outputs (e.g., 0 to 10, 12 to 22) of the correlation value combiner. For example, referring to FIG. 4, $R_1[3]$ may be a value obtained by coherent combining, after calculating for each antenna a correlation value between the NPRACH symbol group received on the subcarrier 6 and the NPRACH symbol group received on the subcarrier 7. Here, since the subcarrier interval used to calculate the correlation value is -1, the correlation value combiner may connect $R_1[3]$ to an output 10. As another example, referring to FIG. 4, $R_2[3]$ may be a value coherent combined after calculating for each antenna a correlation value between the NPRACH symbol group received on the subcarrier 6 and the NPRACH symbol group received on the subcarrier 1. Here, since the interval of the subcarrier used to calculate the correlation value is 5, the correlation value combiner may connect $R_2[3]$ to an output 16.

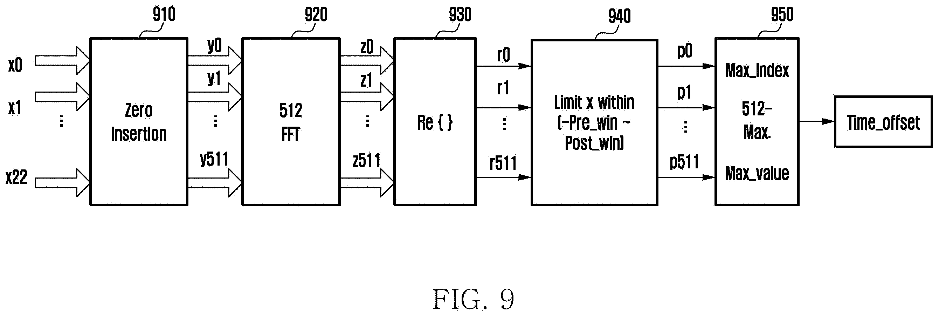

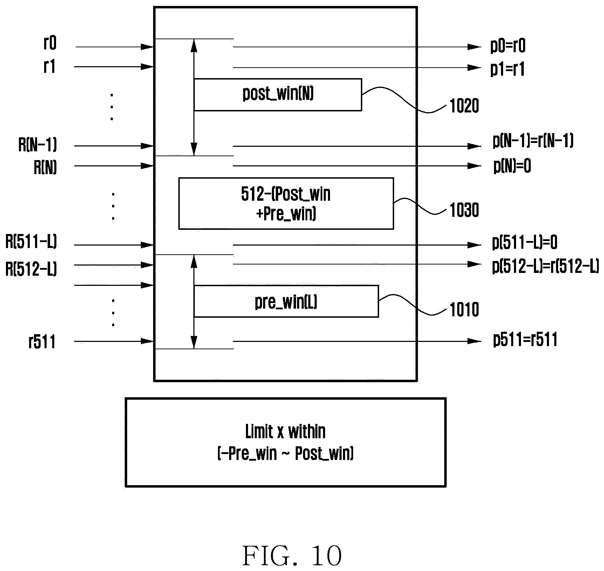

The result classified as described above may be provided as an input to the timing offset decision block. The operation of the timing offset decision block will be described in greater detail with reference to FIGS. 9 and 10.

Hereinafter, a method of obtaining information for timing offset and uplink synchronization from a phase offset according to embodiments of the disclosure will be described with reference to FIGS. 9 and 10.

FIG. 9 illustrates an example timing offset decision block according to embodiments of the disclosure, and FIG. 10 illustrates an example window block for determining a timing offset according to embodiments of the disclosure.

First, referring to FIG. 9, the result (x1, x2, ... , x22) of classification according to the method described in FIG. 8 may be provided as an input to a timing offset decision block. For example, when Fast Fourier Transform (FFT) having a size of 512 is used, as illustrated in FIG. 9, 23 correlation coupler outputs (x0, x2, ... , x22) are sequentially transmitted as an input of the FFT, and the remaining FFT inputs (index 11 and 23 to 511) are input as 0 (910). Here, since the index 11 means that the interval of the subcarrier (i.e., hopping interval) is 0, it is input as 0.

The timing offset decision block may insert the zero bit 0 and then perform a Fourier transform based on corresponding outputs (y0, y1, ... , y511), thereby outputting resultant values (z0, z1, ... , z511) through 512 output terminals.

The values (z0, z1, ... , z511) output from the FFT may be output (r0, r1, ... , r511) after performing a power operation ($I^2 + Q^2$).

The timing offset decision block may output values (p0, p1, ... , p511) that overwrite with zeros those values that do not fall within a certain window range for the values (r0, r1, ... , r511) output by the FFT, corresponding to real numbers. More specifically, referring to FIG. 10, a pre-window range 1010 and a post-window range 1020 may be set. Here, a sum of the pre-window range 1010 and the post-window range 1020 is less than or equal to the FFT size (e.g., 512). The timing offset decision block may perform an operation to overwrite values that do not fall within the above-described ranges with zeros.

Thereafter, the timing offset decision block may identify a maximum value within the window range (1010, 1020) among the output values (p0, p1, ... , p511). Here, when the selected maximum value is selected within the pre-window, the FFT index 512 may be applied to make sure that it is a negative delay. The timing offset decision block may determine the timing offset by applying the Equation 7 to the FFT index of the identified maximum value.

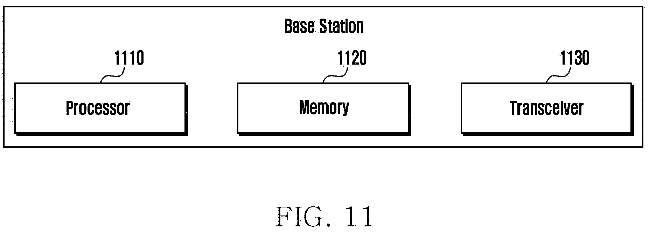

FIG. 11 illustrates a configuration of an example base station according to embodiments of the disclosure. Referring to FIG. 11, the base station may include a processor 1110, a memory 1120, and a transceiver 1130.

The processor 1110 may control the overall operation of the base station. For example, the processor 1110 may transmit and receive a signal through the transceiver 1130. In addition, the processor 1110 may perform functions of a protocol stack required by the communication standard. To this end, the processor 1110 may include at least one processor. Further, the processor 1110 may control the base station to perform the operations according to the above-described embodiments.

The memory 1120 may store data such as a basic program, an application program, and configuration information, for operating the base station. The memory 1120 may include a volatile memory, a non-volatile memory, or a combination of the volatile memory and the non-volatile memory. The memory 1120 may provide stored data according to a request of the processor 1110.

The transceiver 1130 may perform functions for transmitting and receiving signals through a wired channel or a wireless channel. For example, the transceiver 1130 may perform a conversion function between a baseband signal and a bit string according to the physical layer standard of the system. For example, upon data transmission, the transceiver 1130 may generate complex symbols by encoding and modulating a transmission bit string. Further, upon data reception, the transceiver 1130 may restore the baseband signal to the received bit string by demodulation and decoding. In addition, the transceiver 1130 may up-convert the baseband signal into a radio frequency (RF) band signal, transmit the RF band signal through an antenna, and down-convert an RF band signal received through the antenna into a baseband signal. To this end, the transceiver 1130 may include a transmission filter, a reception filter, an amplifier, a mixer, an oscillator, a digital-to-analog converter (DAC), an analog-to-digital converter (ADC), or the like. Further, the transceiver 1130 may include an antenna. The transceiver 1130 may include at least one antenna array including a plurality of antenna elements. In terms of hardware, the transceiver 1130 may be configured as a digital and analog circuit (e.g., radio frequency integrated circuit, RFIC)). Here, the digital and analog circuits may be implemented as one package. Further, the transceiver 1130 may include a plurality of RF chains. Further, the transceiver 1130 may transmit and receive a signal. To this end, the transceiver 1130 may include at least one transceiver.

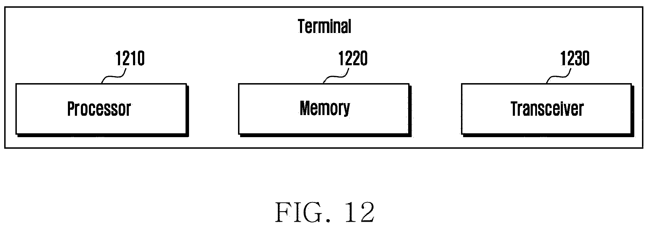

FIG. 12 illustrates a configuration of a terminal according to embodiments of the disclosure. Referring to FIG. 12, a base station may include a processor 1210, a memory 1220, and a transceiver 1230.

The processor 1210 may control the overall operation of the base station. For example, the processor 1210 may transmit and receive a signal through the transceiver 1230. Further, the processor 1210 may perform functions of a protocol stack required by the communication standard. To this end, the processor 1210 may include at least one processor. Further, the processor 1210 may control the base station to perform the operations according to the above-described embodiments.

The memory 1220 may store data such as a basic program, an application program, and configuration information, for operation of the base station. The memory 1120 may include a volatile memory, a non-volatile memory, or a combination of the volatile memory and the non-volatile memory. The memory 1220 may provide stored data according to a request of the processor 1210.

The transceiver 1230 may perform functions for transmitting and receiving signals through a wired channel or a wireless channel. For example, the transceiver 1230 may perform a conversion function between a baseband signal and a bit string according to a physical layer standard of the system. For example, during data transmission, the transceiver 1230 may generate complex symbols by encoding and modulating the transmission bit string. Further, upon data reception, the transceiver 1230 may restore the baseband signal to the received bit string by demodulation and decoding. In addition, the transceiver 1230 may up-convert the baseband signal into a radio frequency (RF) band signal to transmit the RF band signal through an antenna, and down-convert an RF band signal received through the antenna into a baseband signal. To this end, the transceiver 1230 may include a transmission filter, a reception filter, an amplifier, a mixer, an oscillator, a digital-to-analog converter (DAC), an analog-to-digital converter (ADC), or the like. Further, the transceiver 1130 may include an antenna unit. The transceiver 1230 may include at least one antenna array including a plurality of antenna elements. In terms of hardware, the transceiver 1230 may be configured as a digital and analog circuit (e.g., a radio frequency integrated circuit, RFIC). Here, the digital and analog circuits may be implemented as one package. Further, the transceiver 1130 may include a plurality of RF chains. Furthermore, the transceiver 1230 may transmit and receive a signal. To this end, the transceiver 1230 may include at least one transceiver.

It should be appreciated that various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

The methods according to the embodiments described in the claims or the specification of the disclosure may be implemented in hardware, software, or a combination of hardware and software.

When implemented by software, a computer-readable storage medium storing one or more programs (software modules) may be provided. One or more programs stored in a computer-readable storage medium are configured for execution by one or more processors in an electronic device. One or more programs include instructions for causing an electronic device to execute methods according to the claims of the present disclosure or the embodiments described in the specification.:

These programs (software modules or software) may be stored in a random access memory, a non-volatile memory including a flash memory, a read only memory (ROM), an electrically erasable programmable read only memory (EEPROM), a magnetic disc storage device, a compact disc-ROM (CR-ROM), digital versatile discs (DVDs) or other types of optical storage devices, or magnetic cassettes. Alternatively, it may be stored in a memory configured by any combination of some or all of them. Further, each of that configured memories may comprise a plurality of those memories.

In addition, the program may be stored in an attachable storage device accessible through a communication network such as the Internet, an intranet, a local area network (LAN), a wide area network (WAN), or a storage area network (SAN), or a communication network configured by combining the networks. Such a storage device may access a device performing an embodiment of the disclosure through an external port. Further, a separate storage device on the communication network may access a device performing an embodiment of the disclosure.

In the above-described specific embodiments of the disclosure, components included in the disclosure are expressed in a singular or plural form according to the presented specific embodiments. However, the singular form or plural form is selected appropriately for the presented situation for the convenience of description, and the disclosure is not limited to the singular form or the plural form. Further, either a component represented in the plural may be configured as a single element, or a component represented in the singular may be configured as a plurality of elements.

Meanwhile, in the detailed description of the disclosure, specific embodiments have been described, but it is of course possible to make various modifications without departing from the scope of the disclosure. Therefore, the scope of the disclosure should not be limited to the embodiments described, but should be defined by the appended claims.

**Claims**

1. A method performed by a base station (203) in a wireless communication system, the method comprising:

   receiving (510) one or more preambles from a terminal (201);
   obtaining (520) correlation values between a plurality of symbol groups corresponding to the one or more preambles;
   obtaining (540) a timing offset value based on the correlation values and subcarrier difference information for the plurality of symbol groups;
   generating uplink timing information based on the timing offset value; and
   transmitting (550) a random access response, RAR, including the uplink timing information to the terminal,
   wherein symbols included in the plurality of symbol groups are coherent combined based on indexes of the plurality of symbol groups, and
   wherein the correlation values are obtained based on a difference between the indexes of the plurality of symbol groups.

2. The method of claim 1, wherein the obtaining (540) the timing offset value further comprises:

   determining the indexes of the correlation values based on subcarrier difference value between the plurality of symbol groups;
   performing Fast Fourier Transform, FFT, based on the indexes of the correlation values; and
   obtaining the timing offset value based on a result of performing the FFT and a sampling rate.

3. The method of claim 1 or 2, further comprising:

   identifying (530) a number of subcarriers allocated to the one or more preambles; and
   determining the indexes of the correlation values, based on the number of subcarriers.

4. The method of claim 2 or 3, wherein the obtaining (540) of the timing offset value further comprises:

   identifying a maximum value among output values of the FFT;
   identifying a window including an FFT index corresponding to the identified maximum value;
   obtaining the timing offset based on the FFT index when the identified window is a first window; and
   obtaining the timing offset based on a value obtained by subtracting a size of the FFT from the FFT index, when the identified window is a second window.

5. A base station (203) of a wireless communication system, the base station comprising:

   a transceiver (1130) configured to transmit and receive signals; and
   a processor (1110), wherein the processor is configured to:

      receive one or more preambles from a terminal (201),
      obtain correlation values between a plurality of symbol groups corresponding to the one or more preambles,
      obtain a timing offset value, based on the correlation values and subcarrier difference information for the plurality of symbol groups,
      generate uplink timing information based on the timing offset value, and
      transmit a random access response, RAR, including the uplink timing information to the terminal,

   wherein symbols included in the plurality of symbol groups are coherent combined according to indexes of the plurality of symbol groups, and

wherein the correlation values are obtained based on a difference between the indexes of the plurality of symbol groups.

6. The base station (203) of claim 5, wherein the processor (1110) is further configured to:

determine indexes of the correlation values based on a subcarrier difference value between the plurality of symbol groups,

perform fast Fourier transform, FFT, based on the indexes of the correlation values, and

obtain a timing offset value based on a result of performing the FFT and a sampling rate.

7. The base station (203) of claim 5 or 6, wherein the processor (1110) further is configured to:

identify a number of subcarriers allocated to the one or more preambles, and

determine the indexes for the correlation values, based on the number of subcarriers.

8. The base station (203) of claim 6 or 7, wherein the processor further is configured to:

identify a maximum value among output values of the FFT,

identify a window including an FFT index corresponding to the identified maximum value,

obtain the timing offset based on the FFT index, when the identified window is a first window; and

obtain the timing offset based on a value obtained by subtracting a size of the FFT from the FFT index, when the identified window is a second window.

9. A method performed by a terminal (201) in a wireless communication system, the method comprising:

transmitting one or more preambles to a base station (203); and

receiving a random access response, RAR, including uplink timing information from a base station,

wherein the uplink timing information is based on a timing offset value,

wherein the timing offset value is based on correlation values between a plurality of symbol groups corresponding to the one or more preambles and subcarrier difference information for the plurality of symbol groups,

wherein symbols included in the plurality of symbol groups are coherent combined based on indexes of the plurality of symbol groups, and

wherein the correlation values are obtained based on a difference between the indexes of the plurality of symbol groups.

10. The method of claim 9, further comprising transmitting message 3 to the base station (203) based on the uplink timing information,

wherein the uplink timing information corresponds to a timing advance command, TAC.

11. The method of claim 9 or 10,

wherein the timing offset value is obtained based on a result of performing fast Fourier transform, FFT, and a sampling rate,

wherein the FFT is performed based on indexes of the correlation values, and

wherein the indexes of the correlation values are determined based on a subcarrier difference value between the plurality of symbol groups.

12. The method of any one of claims 9 to 11, further comprising receiving, from the base station (203), information on a number of subcarriers allocated to the one or more preambles through higher layer signaling,

wherein the indexes for the correlation values are determined based on the number of subcarriers.

**Patentansprüche**

1. Verfahren, durchgeführt durch eine Basisstation (203) in einem Drahtloskommunikationssystem, wobei das Verfahren Folgendes umfasst:

Empfangen (510) einer oder mehrerer Präambeln von einem Endgerät (201);

Erlangen (520) von Korrelationswerten zwischen einer Vielzahl von Symbolgruppen, die der einen oder den mehreren Präambeln entsprechen;

Erlangen (540) eines Zeitplanungsversatzwertes basierend auf den Korrelationswerten und Unterträgerdifferenzinformationen für die Vielzahl von Symbolgruppen;

Generieren von Uplink-Zeitplanungsinformationen basierend auf dem Zeitplanungsversatzwert; und

Übertragen (550) einer Direktzugriffsantwort, RAR, welche die Uplink-Zeitplanungsinformationen enthält, an das Endgerät,

wobei Symbole, die in der Vielzahl von Symbolgruppen enthalten sind, basierend auf Indizes der Vielzahl von Symbolgruppen kohärent kombiniert sind und

wobei die Korrelationswerte basierend auf einer Differenz zwischen den Indizes der Vielzahl von Symbolgruppen erlangt werden.

2. Verfahren nach Anspruch 1, wobei das Erlangen (540) des Zeitplanungsversatzwertes ferner Folgendes umfasst:

Bestimmen der Indizes der Korrelationswerte basierend auf einem Unterträgerdifferenzwert zwischen der Vielzahl von Symbolgruppen;

Durchführen einer schnellen Fourier-Transformation, FFT, basierend auf den Indizes der Korrelationswerte; und

Erlangen des Zeitplanungsversatzwertes basierend auf einem Ergebnis des Durchführens der FFT und einer Abtastrate.

3. Verfahren nach Anspruch 1 oder 2, ferner umfassend:

Identifizieren (530) einer Anzahl von Unterträgern, die der einen oder den mehreren Präambeln zugeordnet sind; und

Bestimmen der Indizes der Korrelationswerte basierend auf der Anzahl von Unterträgern.

4. Verfahren nach Anspruch 2 oder 3, wobei das Erlangen (540) des Zeitplanungsversatzwertes ferner Folgendes umfasst:

Identifizieren eines Maximalwerts unter den Ausgabewerten der FFT;

Identifizieren eines Fensters, das einen FFT-Index enthält, der dem identifizierten Maximalwert entspricht;

Erlangen des Zeitplanungsversatzes basierend auf dem FFT-Index, wenn das identifizierte Fenster ein erstes Fenster ist; und

Erlangen des Zeitplanungsversatzes basierend auf einem Wert, der durch Subtrahieren einer Größe der FFT von dem FFT-Index erlangt wird, wenn das identifizierte Fenster ein zweites Fenster ist.

5. Basisstation (203) eines Drahtloskommunikationssystems, wobei die Basisstation Folgendes umfasst:

einen Sendeempfänger (1130), der dazu konfiguriert ist, Signale zu übertragen und zu empfangen; und

einen Prozessor (1110), wobei der Prozessor zu Folgendem konfiguriert ist:

Empfangen einer oder mehrerer Präambeln von einem Endgerät (201),

Erlangen von Korrelationswerten zwischen einer Vielzahl von Symbolgruppen, die der einen oder den mehreren Präambeln entsprechen,

Erlangen eines Zeitplanungsversatzwertes basierend auf den Korrelationswerten und Unterträgerdifferenzinformationen für die Vielzahl von Symbolgruppen,

Generieren von Uplink-Zeitplanungsinformationen basierend auf dem Zeitplanungsversatzwert und

Übertragen einer Direktzugriffsantwort, RAR, die die Uplink-Zeitplanungsinformationen enthält, an das Endgerät,

wobei Symbole, die in der Vielzahl von Symbolgruppen enthalten sind, gemäß Indizes der Vielzahl von Symbolgruppen kohärent kombiniert sind und

wobei die Korrelationswerte basierend auf einer Differenz zwischen den Indizes der Vielzahl von Symbolgruppen erlangt werden.

6. Basisstation (203) nach Anspruch 5, wobei der Prozessor (1110) ferner zu Folgendem konfiguriert ist:

Bestimmen von Indizes der Korrelationswerte basierend auf einem Unterträgerdifferenzwert zwischen der Vielzahl von Symbolgruppen,

Durchführen einer schnellen Fourier-Transformation, FFT, basierend auf den Indizes der Korrelationswerte und Erlangen eines Zeitplanungsversatzwertes basierend auf einem Ergebnis des Durchführens der FFT und einer Abtastrate.

7. Basisstation (203) nach Anspruch 5 oder 6, wobei der Prozessor (1110) ferner zu Folgendem konfiguriert ist:

Identifizieren einer Anzahl von Unterträgern, die der einen oder den mehreren Präambeln zugeordnet sind, und Bestimmen der Indizes für die Korrelationswerte basierend auf der Anzahl von Unterträgern.

8. Basisstation (203) nach Anspruch 6 oder 7, wobei der Prozessor ferner zu Folgendem konfiguriert ist:

Identifizieren eines Maximalwerts unter den Ausgabewerten der FFT,

Identifizieren eines Fensters, das einen FFT-Index enthält, der dem identifizierten Maximalwert entspricht,

Erlangen des Zeitplanungsversatzes basierend auf dem FFT-Index, wenn das identifizierte Fenster ein erstes Fenster ist; und

Erlangen des Zeitplanungsversatzes basierend auf einem Wert, der durch Subtrahieren einer Größe der FFT von dem FFT-Index erlangt wird, wenn das identifizierte Fenster ein zweites Fenster ist.

9. Verfahren, durchgeführt durch ein Endgerät (201) in einem Drahtloskommunikationssystem, wobei das Verfahren Folgendes umfasst:

Übertragen einer oder mehrerer Präambeln an eine Basisstation (203); und

Empfangen einer Direktzugriffsantwort, RAR, die Uplink-Zeitplanungsinformationen enthält, von einer Basisstation,

wobei die Uplink-Zeitplanungsinformationen auf einem Zeitplanungsversatzwert basieren,

wobei der Zeitplanungsversatzwert auf Korrelationswerten zwischen einer Vielzahl von Symbolgruppen, die der einen oder den mehreren Präambeln entsprechen, und Unterträgerdifferenzinformationen für die Vielzahl von Symbolgruppen basiert,

wobei Symbole, die in der Vielzahl von Symbolgruppen enthalten sind, basierend auf Indizes der Vielzahl von Symbolgruppen kohärent kombiniert sind und

wobei die Korrelationswerte basierend auf einer Differenz zwischen den Indizes der Vielzahl von Symbolgruppen erlangt werden.

10. Verfahren nach Anspruch 9, ferner umfassend Übertragen einer Nachricht 3 an die Basisstation (203) basierend auf den Uplink-Zeitplanungsinformationen,

wobei die Uplink-Zeitplanungsinformationen einem Timing-Advance-Befehl, TAC, entsprechen.

11. Verfahren nach Anspruch 9 oder 10,

wobei der Zeitplanungsversatzwert basierend auf einem Ergebnis des Durchführens einer schnellen Fourier-Transformation, FFT, und einer Abtastrate erlangt wird,

wobei die FFT basierend auf Indizes der Korrelationswerte durchgeführt wird und

wobei die Indizes der Korrelationswerte basierend auf einem Unterträgerdifferenzwert zwischen der Vielzahl von Symbolgruppen bestimmt werden.

12. Verfahren nach einem der Ansprüche 9 bis 11, ferner umfassend Empfangen von Informationen über eine Anzahl von Unterträgern, die der einen oder den mehreren Präambeln durch Signalisierung einer höheren Schicht zugeordnet sind, von der Basisstation (203),

wobei die Indizes für die Korrelationswerte basierend auf der Anzahl von Unterträgern bestimmt werden.

**Revendications**

1. Procédé exécuté par une station de base (203) dans un système de communication sans fil, le procédé comprenant :

la réception (510) d'un ou plusieurs préambules en provenance d'un terminal (201) ;

l'obtention (520) de valeurs de corrélation entre une pluralité de groupes de symboles correspondant à l'un ou plusieurs préambules ;

l'obtention (540) d'une valeur de décalage de synchronisation sur la base des valeurs de corrélation et d'informations de différence de sous-porteuse pour la pluralité de groupes de symboles ;

la génération d'informations de synchronisation de liaison montante sur la base de la valeur de décalage de synchronisation ; et

la transmission (550) d'une réponse d'accès aléatoire, RAR, comprenant les informations de synchronisation de liaison montante au terminal,

dans lequel les symboles compris dans la pluralité de groupes de symboles sont combinés de manière cohérente sur la base d'indices de la pluralité de groupes de symboles, et

dans lequel les valeurs de corrélation sont obtenues sur la base d'une différence entre les indices de la pluralité de groupes de symboles.

2.  Procédé selon la revendication 1, dans lequel l'obtention (540) de la valeur de décalage de synchronisation comprend en outre :

la détermination des indices des valeurs de corrélation sur la base d'une valeur de différence de sous-porteuse entre la pluralité de groupes de symboles ;

la réalisation d'une transformation de Fourier rapide, FFT, sur la base des indices des valeurs de corrélation ; et

l'obtention de la valeur de décalage de synchronisation sur la base d'un résultat de réalisation de la FFT et d'une fréquence d'échantillonnage.

3.  Procédé selon l'une des revendications 1 ou 2, comprenant en outre :

l'identification (530) d'un nombre de sous-porteuses attribuées à l'un ou plusieurs préambules ; et

la détermination des indices des valeurs de corrélation, sur la base du nombre de sous-porteuses.

4.  Procédé selon la revendication 2 ou 3, dans lequel l'obtention (540) de la valeur de décalage de synchronisation comprend en outre :

l'identification d'une valeur maximale parmi les valeurs de sortie de la FFT ;

l'identification d'une fenêtre comprenant un indice FFT correspondant à la valeur maximale identifiée ;

l'obtention du décalage de synchronisation sur la base de l'indice FFT lorsque la fenêtre identifiée est une première fenêtre ; et

l'obtention du décalage de synchronisation sur la base d'une valeur obtenue en soustrayant une taille de la FFT de l'indice FFT, lorsque la fenêtre identifiée est une deuxième fenêtre.

5.  Station de base (203) d'un système de communication sans fil, la station de base comprenant :

un émetteur-récepteur (1130) configuré pour émettre et recevoir des signaux ; et

un processeur (1110), dans lequel le processeur est configuré pour :

recevoir un ou plusieurs préambules en provenance d'un terminal (201),

obtenir des valeurs de corrélation entre une pluralité de groupes de symboles correspondant à l'un ou plusieurs préambules,

obtenir une valeur de décalage de synchronisation, sur la base des valeurs de corrélation et d'informations de différence de sous-porteuse pour la pluralité de groupes de symboles ;

générer des informations de synchronisation de liaison montante sur la base de la valeur de décalage de synchronisation ; et

transmettre une réponse d'accès aléatoire, RAR, comprenant les informations de synchronisation de liaison montante au terminal,

dans lequel les symboles compris dans la pluralité de groupes de symboles sont combinés de manière cohérente selon les indices de la pluralité de groupes de symboles, et

dans lequel les valeurs de corrélation sont obtenues sur la base d'une différence entre les indices de la pluralité de groupes de symboles.

6.  Station de base (203) selon la revendication 5, dans lequel le processeur (1110) est en outre configuré pour :

déterminer les indices des valeurs de corrélation sur la base d'une valeur de différence de sous-porteuse entre la pluralité de groupes de symboles,
réaliser une transformation de Fourier rapide, FFT, sur la base des indices des valeurs de corrélation ; et
obtenir une valeur de décalage de synchronisation sur la base d'un résultat de réalisation de la FFT et d'une
fréquence d'échantillonnage.

7. Station de base (203) selon la revendication 5 ou 6, dans lequel le processeur (1110) est en outre configuré pour :

identifier un nombre de sous-porteuses attribuées à l'un ou plusieurs préambules ; et
déterminer les indices pour les valeurs de corrélation, sur la base du nombre de sous-porteuses.

8. Station de base (203) selon la revendication 6 ou 7, dans lequel le processeur est en outre configuré pour :

identifier une valeur maximale parmi les valeurs de sortie de la FFT,
identifier une fenêtre comprenant un indice FFT correspondant à la valeur maximale identifiée ;
obtenir le décalage de synchronisation sur la base de l'indice FFT lorsque la fenêtre identifiée est une première
fenêtre ; et
obtenir le décalage de synchronisation sur la base d'une valeur obtenue en soustrayant une taille de la FFT de
l'indice FFT, lorsque la fenêtre identifiée est une deuxième fenêtre.

9. Procédé réalisé par un terminal (201) dans un système de communication sans fil, le procédé comprenant :

la transmission d'un ou de plusieurs préambules à une station de base (203) ; et
la réception d'une réponse d'accès aléatoire, RAR, comprenant des informations de synchronisation de liaison
montante en provenance d'une station de base,
dans lequel les informations de synchronisation de liaison montante sont basées sur une valeur de décalage de
synchronisation,
dans lequel la valeur de décalage de synchronisation est basée sur des valeurs de corrélation entre une pluralité
de groupes de symboles correspondant à l'un ou plusieurs préambules et des informations de différence de sous-
porteuse pour la pluralité de groupes de symboles ;
dans lequel les symboles compris dans la pluralité de groupes de symboles sont combinés de manière cohérente
sur la base d'indices de la pluralité de groupes de symboles, et
dans lequel les valeurs de corrélation sont obtenues sur la base d'une différence entre les indices de la pluralité de
groupes de symboles.

10. Procédé selon la revendication 9, comprenant en outre la transmission d'un message 3 à la station de base (203) sur
la base des informations de synchronisation de liaison montante,
dans lequel les informations de synchronisation de liaison montante correspondent à une commande d'avance de
synchronisation, TAC.

11. Procédé selon la revendication 9 ou 10, dans lequel la valeur de décalage de synchronisation est obtenue sur la base
d'un résultat de réalisation d'une transformation de Fourier rapide, FFT, et d'une fréquence d'échantillonnage,

dans lequel la FFT est réalisée sur la base d'indices des valeurs de corrélation, et
dans lequel les indices des valeurs de corrélation sont déterminés sur la base d'une valeur de différence de sous-
porteuse entre la pluralité de groupes de symboles.

12. Procédé selon l'une quelconque des revendications 9 à 11, comprenant en outre la réception, en provenance de la
station de base (203), d'informations sur un nombre de sous-porteuses attribuées à l'un ou plusieurs préambules par
l'intermédiaire d'une signalisation de couche supérieure,
dans lequel les indices pour les valeurs de corrélation sont déterminés sur la base du nombre de sous-porteuses.

GSM Carriers

200 kHz for NB-IoT

(a)

LTE Bandwidth    Guard-band for NB-IoT

(b)

LTE Bandwidth

1 PRB for NB-IoT (180 kHz)

(c)

FIG. 1

FIG. 2

FIG. 3

FIG. 4

START

Receiving preamble repetitions from a terminal ~510

Obtaining correlation values between a plurality of
symbol groups included in the preamble repetitions ~520

Identifying subcarriers on which the
plurality of symbol groups are received ~530

obtaining a timing offset value from the correlation
values based on a difference between the subcarriers ~540

Transmitting RAR to the terminal ~550

END

FIG. 5

Antenna #

| | | | | | |
|---|---|---|---|---|---|
| 610 | 620 | 630 | 640 | 650 | 660 |
| GAP & CP remover | Freq. shifter | AGC | FFT | Subcarrier demapping | Dehopping |

| | | |
|---|---|---|
| Time offset correlator | Correlation value combiner(MRC) | Time offset decision |
| 670 | 680 | 690 |

FIG. 6

FIG. 7

FIG. 8

910 Zero insertion

x0 x1 ... x22

y0 y1 ... y511

920 512 FFT

z0 z1 ... z511

930 Re {}

r0 r1 ... r511

940 Limit x within [-Pre_win ~ Post_win]

p0 p1 ... p511

950 Max_Index 512- Max. Max_value

Time_offset

FIG. 9

FIG. 10

**Base Station**

| 1110 | 1120 | 1130 |
|------|------|------|
| Processor | Memory | Transceiver |

FIG. 11

**Terminal**

| 1210 | 1220 | 1230 |
|------|------|------|
| Processor | Memory | Transceiver |

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110891036